(19) **Europäisches Patentamt**
**European Patent Office**
**Office européen des brevets**

(11) **EP 2 345 687 B1**

(12) **EUROPEAN PATENT SPECIFICATION**

(45) Date of publication and mention
of the grant of the patent:
**05.11.2014 Bulletin 2014/45**

(51) Int Cl.:
***C08J 3/14*** *(2006.01)* ***B01J 14/00*** *(2006.01)*

(21) Application number: **09820518.0**

(86) International application number:
**PCT/JP2009/066755**

(22) Date of filing: **28.09.2009**

(87) International publication number:
**WO 2010/044340 (22.04.2010 Gazette 2010/16)**

(54) **METHOD AND APPARATUS FOR PRODUCING POLYMER PARTICLES**

VERFAHREN UND VORRICHTUNG ZUR HERSTELLUNG VON POLYMERPARTIKELN

PROCÉDÉ ET APPAREIL POUR LA FABRICATION DE PARTICULES DE POLYMÈRE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **16.10.2008 JP 2008267887**

(43) Date of publication of application:
**20.07.2011 Bulletin 2011/29**

(73) Proprietor: **Ube Industries, Ltd.**
**Ube-shi**
**Yamaguchi 755-8633 (JP)**

(72) Inventors:
• **ARIDOMI, Tadatoshi**
**Ichihara-shi**
**Chiba 290-0045 (JP)**
• **ASANO, Yukihiko**
**Ichihara-shi**
**Chiba 290-0045 (JP)**

• **TAKAHASHI, Junya**
**Ichihara-shi**
**Chiba 290-0045 (JP)**
• **SHOJI, Tatsuya**
**Ichihara-shi**
**Chiba 290-0045 (JP)**
• **OHYA, Shyusei**
**Ichihara-shi**
**Chiba 290-0045 (JP)**

(74) Representative: **Gille Hrabal**
**Brucknerstrasse 20**
**40593 Düsseldorf (DE)**

(56) References cited:
**EP-A1- 1 471 091      DD-B- 201 310
JP-A- 4 248 849       JP-A- 10 182 840
JP-A- 61 211 342**

**Description**

Technical Field

The present invention relates to a manufacturing method and a manufacturing apparatus for polymer particles, and more specifically, to a manufacturing method and a manufacturing apparatus for polymer particles having a relatively narrow particle diameter distribution.

Background Art

A polymer fine particle is utilized in a wide range of fields such as cosmetic and toiletry-related raw materials, anti-blocking agents for films, liquid crystal display-related spacers and light diffusion particles, printing ink-related rheology adjusting agents, test particles for medical diagnostics, and chromatograph fillers, depending on materials, forms, and characteristic physical properties of the particle.

Apolymerizationmethod, apulverizationmethod, a spray method, an emulsification method, a phase separation method, and the like are well-known as manufacturing methods for such polymer particles. Of those, the phase separation method is exemplified by a technique for precipitating polymer particles from a supersaturated state by lowering a temperature of a polymer solution or adding a non-solvent to a polymer solution to lower the solubility of a polymer in the solution.

Patent Literature 1 discloses a method of forming polymer particles in a continuous manner, including: mechanically mixing a solution, which is obtained by dissolving nylon 66 or an ethylene-methyl methacrylate random copolymer in a good solvent, and a non-solvent for the polymer using a dispenser to carry out primary dispersion of liquid droplets of the polymer; and then further subjecting the resultant to secondary dispersion using an ultrasonic disperser, followed by phase separation and crystallization of the polymer. The primary dispersion step involving the use of a large-sized dispenser and the secondary dispersion step involving the use of an ultrasonic disperser are indispensable to provide polymer particles which have a narrow particle diameter distribution in a continuous manner by the above-mentioned method. From the viewpoints of time and effort and apparatus cost, it cannot be said that the method may be conveniently employed. Further, the literature does not particularly mention that a particle diameter and a particle shape are affected by a liquid flow during particle formation.

Patent Literature 2 discloses a method of providing nylon particles having a narrow particle diameter distribution, including dissolving crystalline nylon in a solvent such as glycerin at a high temperature and gradually cooling the solution to induce phase separation. Further, Patent Literatures 3 and 4 each disclose a technique for precipitating spherical particles by cooling a solution of nylon in polyalcohol.

However, the manufacturing method is a batch-type manufacturing method, and hence lot-to-lot variations in average particle diameter and particle diameter distribution may occur.

As for a continuous-type manufacturing method for polymer particles, Patent Literature 5 discloses a method including mixing a polyamide solution, a polyamide non-solvent, and water to precipitate a polymer, and Patent Literature 6 discloses a method including using a static mixer and using an exchangeable receiver capable of receiving a mixed solution for each short period of time.

Citation List

Patent Literature

[PTL 1] JP 03-26729 A
[PTL 2] JP 08-12765 A
[PTL 3] JP 2007-56085 A
[PTL 4] WO 2006/126563 A1
[PTL 5] JP 2002-80629 A
[PTL 6] JP 2006-143918 A

Summary of Invention

Technical Problem

The inventors of the present invention have confirmed that, even in the case of employing any one of the above-mentioned conventional methods, polymer particles having a narrow particle diameter distribution are not obtained in some cases when the polymer particles are collected in a dispersion solution state and are kept in the state for a long period of time.

That is, an object of the present invention is to provide a manufacturing method which allows the manufacture of polymer particles having a narrow particle diameter distribution even when the polymer particles are kept in a dispersion solution state.

Solution to Problem

The inventors of the present invention have made extensive studies in order to achieve the object. As a result, the inventors have found that the object can be achieved by combining a polymer solution and a polymer non-solvent, and completing the precipitation of polymer particles in a tubular body provided substantially vertically. Thus, the present invention has been completed.

That is, the present invention provides:

1. a manufacturing method for polymer particles, including: mixing a polymer solution, which is obtained by dissolving a polymer in a good solvent, and a polymer non-solvent, which is a non-solvent for the polymer and has compatibility with the good solvent, in a continuous or intermittent manner; and allowing a mixed solution of the polymer solution and the polymer non-solvent to flow down through a tubular body provided substantially vertically, thereby completing the precipitation of polymer particles;

2. a manufacturing apparatus for polymer particles, the apparatus including: raw material solution supplying means for supplying a polymer solution and a polymer non-solvent, a mixed solution combining unit for combining and mixing supplied raw material solutions in an open system; a substantially vertical tubular body provided downstream of the mixed solution combining unit; and a dispersion solution collecting unit provided downstream of the tubular body, in which: stirring means is absent in the mixed solution combining unit to the tubular body; and the tubular body has a length to complete the precipitation of polymer particles in the tubular body; and

3. a manufacturing apparatus for polymer particles, the apparatus including: raw material solution supplying means for supplying a polymer solution and a polymer non-solvent; a spray nozzle for discharging supplied raw material solutions to an open system after combining the solutions in a space of a closed system; a substantially vertical tubular body provided downstream of the spray nozzle; and a dispersion solution collecting unit provided downstream of the tubular body, in which: stirring means is absent in the mixed solution combining unit to the tubular body; and the tubular body has a length to complete the precipitation of polymer particles in the tubular body.

Advantageous Effects of Invention

According to the present invention, the polymer particles having a narrow particle diameter distribution can be manufactured efficiently even when the polymer particles are collected in a dispersion solution state and are kept in the state for a long period of time.

Brief Description of Drawings

[FIG. 1] FIG. 1 is a conceptual diagram illustrating one aspect of a manufacturing apparatus for polymer particles of the present invention.

[FIG. 2] FIG. 2 is a scanning electron microscope photograph of polymer particles obtained in Example 1.

[FIG. 3] FIG. 3 is a scanning electron microscope photograph of polymer particles obtained in Comparative Example 1.

[FIG. 4] FIG. 4 is a scanning electron microscope photograph of polymer particles obtained in Example 10.

Reference Signs List

1: raw material solution supplying means

1-a: polymer solution supplying means

1-b: organic non-solvent supplying means

2: mixed solution combining unit

3: tubular body

4: dispersion solution collecting unit

5: polymer solution supplying apparatus

6: organic non-solvent supplying apparatus

Description of Embodiments

The present invention provides a manufacturing method for polymer particles, including: mixing a polymer solution, which is obtained by dissolving a polymer in a good solvent, and a polymer non-solvent, which is a non-solvent for the polymer and has compatibility with the good solvent, in a continuous or intermittent manner; and allowing a mixed solution of the polymer solution and the polymer non-solvent to flow down through a tubular body provided substantially vertically, thereby completing the precipitation of polymer particles.

The polymer to be used in the polymer solution of the present invention is not particularly limited. For example, any one kind or two or more kinds may be appropriately selected from polyolefin, a polystyrene, a synthetic rubber, an acrylic resin, a polyamide, a polyester, a polyimide, and a polyamic acid as a polyimide precursor.

Unless otherwise indicated, the polyolefin to be used in the present invention means a homopolymer or a copolymer of ethylene, propylene, butene-1, pentene-1, hexene-1, 3-methylbutene-1, 4-methylpentene-1, and 5-methylhexene-1. Of those, a polyethylene, a polypropylene, and a copolymer thereof are preferred.

The synthetic rubber to be used in the present invention refers to one having properties of an artificially synthesized elastomer. Examples thereof include: diene-based rubbers such as a polybutadiene (butadienerubber), a polyisoprene (isoprene rubber), a styrene-polybutadiene rubber, an acrylonitrile-butadiene rubber, and a polychloroprene (chloroprene rubber); olefin-based rubbers such as an isobutylene-isoprene rubber, an ethylene-propylene rubber, an ethylene-propylene-diene rubber, and an ethylene-vinyl acetate copolymer; acrylic rubbers such as an acrylic acid ester-acrylonitrile copolymer and an acrylic acid ester-2-chloroethyl vinyl ether copolymer; a urethane rubber; a chlorosulfonated polyethylene rubber; a polyalkylene-sulfide rubber; a silicone rubber; an epichlorohydrin rubber, a poly(chlorotrifluoroethylene) rubber; an alfin rubber; and a thermoplastic elastomer (styrene-based or isoprene-based). Of those, a polybutadiene and a polyisoprene are preferred.

The acrylic resin to be used in the present invention means a resin obtained by the polymerization of acrylic acid and a derivative thereof, and examples thereof include a polymer and a copolymer of acrylic acid and an ester thereof, acrylic amide, acrylonitrile, metbacrylic acid and an ester thereof, and the like.

The polyamide to be used in the present invention is exemplified by products obtained by ring-opening polymerization of cyclic amides, polycondensation of amino acids, and polyeondensation of dicarboxylic acids and diamines. Raw materials to be used in the ring-opening polymerization of cyclic amides are exemplified by $\varepsilon$-caprolactam and $\omega$-laurolactam. Raw materials to be used in the polycondensation of amino acids are exemplified by $\varepsilon$-aminocaproic acid, $\omega$-aminododecanoic acid, and $\omega$-aminoundecanoic acid. Raw materials to be used in the polycondensation of dicarboxylic acids and diamines are exemplified by dicarboxylic acids such as oxalic acid, adipic acid, sebacic acid, 1,4-cyclohexyldicarboxylic acid, and derivatives thereof, and diamines such as ethylenediamine, hexamethylenediamine, 1,4-cyclohexyldiamine, pentamethylenediamine, and decamethylenediamine.

Those polyamides may be further copolymerized with a small amount of an aromatic component such as terephthalic acid, isophthalic acid, or m-xylylenediamine.

Specific examples of the polyamide to be used in the present invention include polyamide 6, polyamide 46, polyamide 66, polyamide 610, polyamide 612, polyamide 11, polyamide 12, polyamide 6/66, a polynonamethylene terephthalamide (polyamide 9T), a polyhexamethylene adipamide/polyhexamethylene terephthalamide copolymer (polyamide 66/6T), a polyhexamethylene terephthalamide/polycaproamide copolymer (polyamide 6T/6), a polyhexamethylene adipamide/polyhexamethylene isophthalamide copolymer (polyamide 66/6I), a polyhexamethylene isophthalamide/polycaproamide copolymer (polyamide 6I/6), a polydodecamide/polyhexamethylene terephthalamide copolymer (polyamide 12/6T), a polyhexamethylene adipamide/polyhexamethylene terephthalamide/polyhexamethylene isophthalamide copolymer (polyamide 66/6T/6I), a polyhexamethylene terephthalamide/polyhexamethylene isophthalamide copolymer (polyamide 6T/6I), a polyhexamethylene terephthalamide/poly(2-methylpentamethylene terephthalamide) copolymer (polyamide 6T/MST), a polyxylylene adipamide (polyamide MXD6), and mixtures or copolymer resins thereof . Of those, polyamide 6, polyamide 46, polyamide 66, polyamide 610. polyamide, 612, polyamide 11, polyamide 12, or a polyamide 6/66 copolymer resin is preferred, and polyamide 6 is particularly preferred from the viewpoint of handleability of a material.

The polyester to be used in the present invention is exemplified by polyethylene terephthalate (PET) obtained using terephthalic acid as an acid component and ethylenediol as a diol component, polypropylene terephthalate obtained using terephthalic acid as an acid component and 1,3-propanediol as a diol component, and polybutylene terephthalate obtained using terephthalic acid as an acid component and 1,4-butanediol as a diol component. Of those, PET, which is most easily available, is preferred from the industrial viewpoint.

As for the polyimide to be used in the present invention, it is often difficult to dissolve a polyimide solid, which has been manufactured in advance, in a good solvent to prepare a polyimide solution because the solubility of the polyimide solid is low. It is therefore preferred that a polyamic acid as a polyimide precursor be used in a polymer solution.

The polyimide precursor to be used in the present invention refers to a polyamic acid obtained by the polymerization of monomers preferably belonging to an aromatic compound of a tetracarboxylic acid component and a diamine component, or a partially imidized product thereof, which can be ring-opened by heat treatment or chemical imidization to produce a polyimide. The polyimide refers to a product obtained by imidizing the polyamic acid at an imidization rate of about 50% or more.

In the foregoing, used is a polyimide precursor or a polyimide, suitably a polyimide precursor, which is obtained by dissolving and polymerizing equimolar amounts of the tetracarboxylic acid component and diamine component in an organic solvent, and has a limiting viscosity number of 1.5 or less, preferably 1.0 or less.

The limiting viscosity number is determined by measuring a specific viscosity of a dilute polymer solution at several polymer concentrations to obtain an extrapolation value for ((specific viscosity)/(concentration)) at a concentration of 0.

The polyimide precursor or polyimide in which the limiting viscosity number is 1.5 or more is unsuitable for forming particles because the interaction between polymers and the interaction between a polymer and a good solvent are large. The aromatic diamine is preferably, for example, an aromatic diamine compound represented by the general formula (1):

$$H_2N\text{-}Ar(R_1)_m\text{-}[A\text{-}Ar(R_1)_m]_n\text{-}NH_2 \qquad (1)$$

(provided that, in the general formula: Ar represents an aromatic ring; $R_1$ or $R_2$ represents a substituent such as hydrogen, a lower alkyl, or a lower alkoxy; A represents a direct bond or a divalent group such as O, S, CO, $SO_2$, SO, $CH_2$, or $C(CH_3)_2$; m represents an integer of 0 or 1 to 4; and n represents an integer of 0 or 1 to 3).

Specific examples of the compound include 4,4'-diaminodiphenyl ether (hereinafter, sometimes abbreviated as ODA), 1,4-phenylenediamine (hereinafter, sometimes abbreviated as PPD), 3,3'-dimethyl-4,4'-diaminodiphenyl ether, and 3,3'-diethoxy-4,4'-diaminodiphenyl ether. Further, the diamine component may be a diaminopyridine represented by the general formula (2).

$$H_2N\text{-}(Py)\text{-}NH_2 \qquad (2)$$

Specific examples thereof include 2,6-diaminopyridine, 3,6-diaminopyridine, 2,5-diaminopyridine, and 3,4-diaminopyridine.

The tetracarboxylic acid component is preferably 3,3',4,4'-biphenyltetracarboxylic dianhydride (hereinafter, sometimes abbreviated as s-BPDA) or 2,3,3',4'-biphenyltetracarboxylic dianhydride (hereinafter, sometimes abbreviated as a-BPDA), and may be 2,3,3',4'- or 3,3',4,4'-biphenyltetracarboxylic acid (a-BPTA or s-BPTA) or a salt of 2,3,3',4'- or 3,3',4,4'-biphenyltetracarboxylic acid or an esterified derivative thereof. The biphenyltetracarboxylic acid component maybe a mixture of the respective biphenyltetracarboxylic acids described above.

Further, the above-mentioned tetracarboxylic acid component may contain, in addition to the biphenyltetracarboxylic acids, tetracarboxylic acids such as pyromellitic acid, 3,3',4,4'-benzophenone tetracarboxylic acid, 2,2-bis(3,4-dicarboxyphenyl)propane, bis(3,4-dicarboxyphenyl)sulfone, bis(3,4-dicarboxyphenyl) ether, bis(3,4-dicarboxyphenyl) thioether, butanetetracarboxylic acid, or acid anhydrides, salts, or esterified derivatives thereof at a ratio of 100 mol% or less, particularly 10 mol% or less with respect to the total of the tetracarboxylic acid components.

A good solvent for manufacturing the polymer solution to be used in the present invention is not particularly limited as long as the good solvent forms an unclouded uniform state that is transparent or is colored but transmits light within 24 hours after the contact of the good solvent with a polymer solid at normal temperature or in a heated state while carrying out a stirring operation or after the polymerization of monomers for the polymer.

Specific examples of the good solvent for thepolyolefin include: higher hydrocarbons such as hexane, heptane, nonane, decane, and cyclohexane; aromatic hydrocarbons such as xylene, toluene, and benzene; aromatic hydrocarbon chlorides such as trichlorobenzene or o-dichlorobenzene; and ethers such as tetrahydrofuran (THF) and diethyl ether. Of those, toluene, xylene, and cyclohexane are preferred.

Preferred specific examples of the good solvent for the polystyrene include tetrahydrofuran (THF) and N-methylpyrrolidone (NMP), and ketones such as methyl ethyl ketone (MEK).

Specific examples of the good solvent for the synthetic rubber include cyclohexane, toluene, benzene, hexane, heptane, THF, ketones, and chloroform. Of those, cyclohexane, toluene, hexane, and THF are preferred.

Specific examples of the good solvent for the acrylic resin include ketones such as acetone and MEK, acetonitrile, benzene, ethanol/carbon tetrachloride, and formic acid. Of those, acetone and MEK are preferred.

The good solvent for the polyamide is preferably a solvent, which dissolves the polyamide at around room temperature, such as an aromatic alcohol or formic acid. Specific examples of the aromatic alcohol include phenol, m-cresol, p-cresol, o-cresol, m-cresylic acid, and chlorophenol. Of those, phenol is preferred. When phenol is used as the solvent, a boiling point increasing compound such as an aliphatic alcohol or water may be added. Formic acid may be an aqueous dilution thereof, preferably one containing 70% by mass or more of formic acid.

Preferred specific examples of the good solvent for the polyester include phenol, chlorophenol, nitrobenzene, and dimethylsulfoxide (DMSO).

The good solvent for the polyimide precursor is a polar organic solvent, and examples thereof include N-methylpyrrolidone (NMP), p-chlorophenol (PCP), pyridine, N,N-dimethylacetamide (DMAc), N,N-dimethylformamide (DMF), dimethylsulfoxide (DMSO), tetramethylurea, phenol, and cresol. Of those, NMP, DMAC, DMF, and DMSO are particularly preferred.

A polymer concentration in the polymer solution is about 0.1 to 50% by mass, preferably 0.5 to 40% by mass, more preferably 1 to 30% by mass. A polymer concentration of 1% by mass or more gives sufficient productivity. A polymer concentration of 50% by mass or less is preferred in terms of handling because the polymer concentration neither causes increases in temperature and pressure required during dissolving a polymer in a solvent nor causes an excessive increase in solution viscosity.

The polymer solution has a viscosity, which varies depending on the molecular weight of a polymer and the kind of a solvent, of preferably 0.01 to 10.0 Pa·s, more preferably 0.1 to 5.0 Pa·s at 25°C. A polyamide solution having a viscosity of 0.01 Pa·s or more gives excellent productivity, and a polyamide solution having a viscosity of 5.0 Pa·s or less allows two solutions to be mixed easily because a difference in viscosity between a polymer solution and a non-solvent becomes small.

To the above-mentioned polymer solution, a non-solvent for a polymer may also be appropriately added in such a range that the polymer is not remarkably precipitated. The addition of the non-solvent to the polymer allows the viscosity of the polymer solution to be reduced, allows the polymer solution to be easily handled, and allows both solutions to be mixed easily through a reduction in viscosity difference between the polymer solution and the non-solvent. Therefore, the addition is useful particularly in the case where the polymer solution has a high viscosity. Further, as long as particle formation is not affected, the polymer solution may have turbidity due to the compatibility of a mixed solvent.

The polymer non-solvent in the present invention has only to be a non-solvent for a polymer and have at least partial compatibility with a good solvent for the polymer, and is preferably one that does not dissolve 0.01% by mass or more of a polymer at a solution temperature of 25°C. It is preferred to use as a main non-solvent one or more kinds selected from, for example, water and monohydric aliphatic alcohols, ketones, and ethers each having a boiling point of 100°C or less. Specific examples thereof include methanol, ethanol, propanol, isopropanol, acetone, MEK, and butyl acetate, or mixtures thereof.

As for a mass flow rate (hereinafter, abbreviated as "flow rate") ratio of the polymer solution to the polymer non-solvent, it is preferred that the flow rate of the polymer non-solvent be equal to or more than the flow rate of the polymer solution. Specifically, the flow rate mass ratio of the polymer solution to the polymer non-solvent is preferably 1:1 to 1:25, more preferably 1:3 to 1:20, even more preferably 1:4 to 1:20, most preferably 1:5 to 1:20.

In the present invention, the polymer solution, the polymer non-solvent, and water may be mixed in a continuous or intermittent manner. In that case, the flow rate of water is preferably 1 to 200% by mass, more preferably 3 to 150% by mass, extremely preferably 5 to 100% by mass with respect to the total flow rate of the polymer non-solvent.

The manufacturing method of the present invention includes at least mixing the above-mentioned polymer solution and polymer non-solvent in a continuous or intermittent manner to prepare amixedsolution. When the polymer non-solvent is formed of a mixture of a plurality of solvents, the plurality of solvents are mixed in advance to prepare an organic mixed non-solvent, and then the polymer solution and the organic mixed non-solvent may be mixed, or the plurality of solvents and the polymer solution may be all mixed simultaneously. Specifically, there are given a method including combining two solutions or a plurality of solutions in an open system, a method including discharging two solutions or a plurality of solutions to an open system after combining the solutions in a space of a closed system such as in a spray nozzle, and a method including supplying two solutions or a plurality of solutions from the same supplying outlet through a combining tube or the like so that the solutions are combined with each other to prepare a mixed solution.

Specific examples of the method of combining two solutions or a plurality of solutions in an open system include a method including combining two solutions or a plurality of solutions by supplying the solutions from the corresponding separate supplying outlets and a method including combining a polymer solution and an organic non-solvent obtained by mixing a plurality of polymer non-solvents in advance by supplying the solutions from the corresponding separate supplying outlets using a nozzle or the like so that the solutions are combined with each other. It is preferred that the polymer solution and the polymer non-solvent be mixed in a space of a tubular body. Specifically, it is preferred that the solutions be combined using, as outlets for supplying two solutions or a plurality of solutions, ones capable of supplying the respective solutions in a space of a tubular body by a method such as discharge, release, or spray. Specific examples of the supplying outlet include a tube having an appropriate tube diameter, a spray nozzle, a screw outlet, an orifice outlet, and a discharge outlet.

Specific examples of the method including discharging two solutions or a plurality of solutions to an open system after combining the solutions in a space of a closed system such as in a spray nozzle include a method including combining and mixing two solutions or a plurality of solutions in a continuous manner and at such a high flow rate that does not cause scale gel generation. This method is more preferred because the method gives a uniform mixed solution through a rapid stirring effect and further can suppress scale gel generation. It is preferred that the mixed solution be sprayed from a nozzle or the like and be uniformly discharged to a solution surface in a combining tube. The spray nozzle to be used is not particularly limited as long as being capable of spraying a crude mixed solution in a space of a closed system after combining two or more solutions in the space, and a nozzle equipped with a static mixer and a two fluid nozzle are preferable used.

Further, it is preferred to allow a mixed solution to naturally flow down through a tubular body.

A method including combining the polymer solution and the polymer non-solvent may be a continuous mixing method including constantly mixing the polymer solution and the polymer non-solvent by discharge or the like, or may be an intermittent mixing method including, for example, discharging and mixing the polymer solution and the polymer non-solvent for each predetermined period.

The supplied polymer solution and polymer non-solvent may be combined as described above and then mixed in a tubular body by carrying out appropriate stirring. Specific means for stirring a mixed solution is exemplified by various stirrers such as a static mixer, an in-line mixer, and a three-one motor. In addition, it is even more preferred to mix two solutions based on only a diffusion effect between the solutions without carrying out stirring in a tubular body because the particle diameter distribution of the resultant polymer particles becomes narrow.

Further, a mixed solution containing two solutions or a plurality of solutions in combination may be made more uniform by passing the solution through an obstacle such as a mesh, a fabric, a non-woven fabric, or a punching metal. One or more kinds of meshes made of metal, glass, ceramics, and resin may be appropriately selected as the mesh.

The temperature at which the polymer solution and the polymer non-solvent are mixed is not particularly limited and may be about room temperature. Further, the solution temperature before or after mixing the polymer solution, the polymer non-solvent, and/or water is preferably 0 to 45°C, more preferably 1 to 30°C.

An apparatus for feeding the polymer solution to a supplying outlet is preferably one capable of quantitatively controlling a volume, and is, for example, preferably a gear pump, a diaphragm pump, a plunger pump, or a syringe pump, particularly preferably a gear pump.

Meanwhile, an apparatus for feeding the polymer non-solvent to a supplying outlet is preferably one capable of controlling a high flow rate, and is, for example, a rotative pump, a diaphragm pump, or a cascade pump.

In the manufacturing method of the present invention, the mixed solution prepared as described above is allowed to flow down through a tubular body provided substantially vertically, thereby completing the precipitation of polymer particles. A method including allowing a mixed solution to flow down through a tubular body, thereby completing the precipitation of polymer particles is exemplified by a method including appropriately controlling the concentration of a polymer solution and a polymer non-solvent in accordance with a known method, regulating the temperature of a mixed solution by, for example, a method including providing a tubular body with a cooling jacket, regulating the length and thickness of a tubular body depending on a retention time necessary for precipitation, or regulating a flow rate of a mixed solution. In practice, this may be achieved by providing a precipitation step including allowing a mixed solution to flow down through a tubular body having a length enough to complete precipitation, and further, a cooling jacket may be provided to promote the precipitation.

The completion of the precipitation of polymer particles in the present invention refers to a state in which the precipitation of polymer particles is substantially completed, and may be a state in which a tiny amount of polymer particles are further precipitated. Specifically, when very little precipitation occurs in further adding an excess non-solvent to a filtrate obtained by filtering a dispersion solution of polymer particles, it can be said that the precipitation of polymer particles is substantially completed in the dispersion solution.

In the case of allowing a mixed solution to flow down through a tubular body, it is preferred that the mixed solution be allowed to flow down through the tubular body in a laminar flow or in a state close to a laminar flow (transition zone) because the difference in retention time between the respective units of the solution in a tubular body becomes small and hence the particle growth time becomes uniform, resulting in polymer particles which have a narrow particle diameter distribution.

An evaluation for confirming whether the flow of the solution in the tube is in a transition zone close to a laminar flow or in a laminar flow state may be carried out by determining a Reynolds number. According to "Chemical Engineering" (author: Toyohiko Hayakawa et al., Jikkyo Shuppan Co., Ltd., issued in 1996), which is a textbook for department of engineering of high schools, P 89-90, the Reynolds number Re of the flow of a solution in a circular tube is represented by the following equation:

[Math. 1]

$$\mathrm{Re} = \frac{D\overline{u}\rho}{\mu}$$

where: D represents an inner diameter (diameter) of a tube [m]; 0 represents an average flow rate [m/s]; $\rho$ represents a density [kg/m³] ; and $\mu$ represents a viscosity [Pa·s]. A flow in the case of a Reynolds number of 4,000 or more is called a turbulent flow, a flow in the case of 2,100 to 4,000 is called a transition zone, and a flow in the case of 2,100 or less is called a laminar flow.

In the manufacturing method for polymer particles of the present invention, the Reynolds number of the flow of a mixed solution in a tubular body is preferably 4,000 or less, more preferably 2,100 or less, even more preferably 1,000 or less, most preferably 600 or less.

As described above, the mixed solution that has precipitated polymer particles in a tubular body is discharged from the tubular body in a dispersion solution state in which polymer particles are dispersed. A method including collecting the polymer particles or dispersion solution state is not particularly limited, and is, for example, a method including collecting only the polymer particles by filtration, or a method including collecting the polymer particles kept in a dispersion solution state in a collection vessel or the like. Of those, from the viewpoint that the polymer particles hardly undergo aggregation, it is preferred to appropriately collect the dispersion solution in a collection vessel or the like. In the polymer particles dispersion solution collected after completing the precipitation of polymer particles as described above, the polymer particles do not grow any more even when being kept in a dispersion solution state in a collection vessel or the like for a long period of time, and hence the particle diameter distribution of the polymer particles is hard to be broadened.

A method including separating polymer particles from polymer particles dispersion solution is exemplified by a method including precipitating polymer particles followed by decantation, centrifugation, or filtration.

It is preferred that the separated polymer particles be washed to remove a solvent and the like in the polymer solution. The washing solution to be used in washing is preferably a solvent having affinity with a solvent for a polymer solution and a non-solvent for polymer particles. For example, it is preferred to use an aliphatic alcohol, hot water, or a mixture thereof at normal temperature or in a heated state.

The polymer particles after the washing may be subjected to drying treatment such as vacuum drying, spray drying, hot-air drying, or fluidized drying. Further, at the same time as drying, the polymer particles may also be treated with a finishing agent, a surface treatment agent, or the like. Further, a dispersion solution after the precipitation of the polymer particles may also be subjected to spray drying to dry the polymer particles.

The polymer particles to be manufactured by the manufacturing method of the present invention are porous particles or particles each having roughness on the surface, the particles each having a number particle diameter of about 1 to 50 $\mu$m, a particle diameter distribution index of about 1.0 to 2.5, preferably 1.0 to 2.0, a specific surface area of about 1 to 80 m²/g, preferably about 3 to 80 m²/g.

It is preferred that substantially spherical particles account for 80% by mass or more of the polymer particles to be manufactured by the manufacturing method of the present invention, and it is more preferred that substantially spherical particles account for 90% by mass or more. When the substantially spherical particles account for 80% by mass or more, excellent fluidity of a powder material is obtained.

When the polymer particles to be manufactured by the manufacturing method of the present invention are of a polyamic acid as a polyimide precursor, the particles are substantially spherical particles each having a number average particle diameter of about 1 to 20 $\mu$m, a particle diameter distribution index of 1.0 to 2.0, and a specific surface area of about 1 to 80 m²/g, and having a porous structure.

When the polymer particles to be manufactured by the manufacturing method of the present invention are of a polybutadiene, the particles are substantially spherical particles each having a number average particle diameter of about 3 to 50 $\mu$m, a particle diameter distribution index of 1.0 to 2.5, and a specific surface area of about 1 to 20 m²/g, and having rough structure on the surface.

When the polymer particles to be manufactured by the manufacturing method of the present invention are of a polyamide, the particles are porous particles each having a number average particle diameterof about 1 to 30 $\mu$m, a particle diameter distribution index of 1.0 to 2.0, preferably 1 to 1.5, anaverage micropore diameter of about 0.01 to 1 $\mu$m, a specific surface area of about 1 to 80 m²/g, a degree of porosity of about 5 to 100, and a pore content of about 10 to 60%, in which a single particle itself has a spherulite structure.

The phrase "single particle itself has a spherulite structure" used herein means a spherulite structure peculiar to crystalline polymer, in which polymer fibrils are formed through three dimensional isotropic or radial growth from a single or a plurality of cores around the center of one single particle. The spherulite structure may be confirmed by the SEM or TEM observation of the cross-section of each of particles.

The present invention also provides a manufacturing apparatus for polymer particles, the apparatus including: raw material solution supplying means for supplying a polymer solution and a polymer non-solvent, a mixed solution combining unit for combining and mixing supplied raw material solutions in an open system, a substantially vertical tubular body provided downstream of the mixed solution combining unit, a dispersion solution collecting unit provided downstream of the tubular body, in which: stirring means is absent in the mixed solution combining unit to the tubular body; and the tubular body has a length to complete the precipitation of polymer particles in the tubular body.

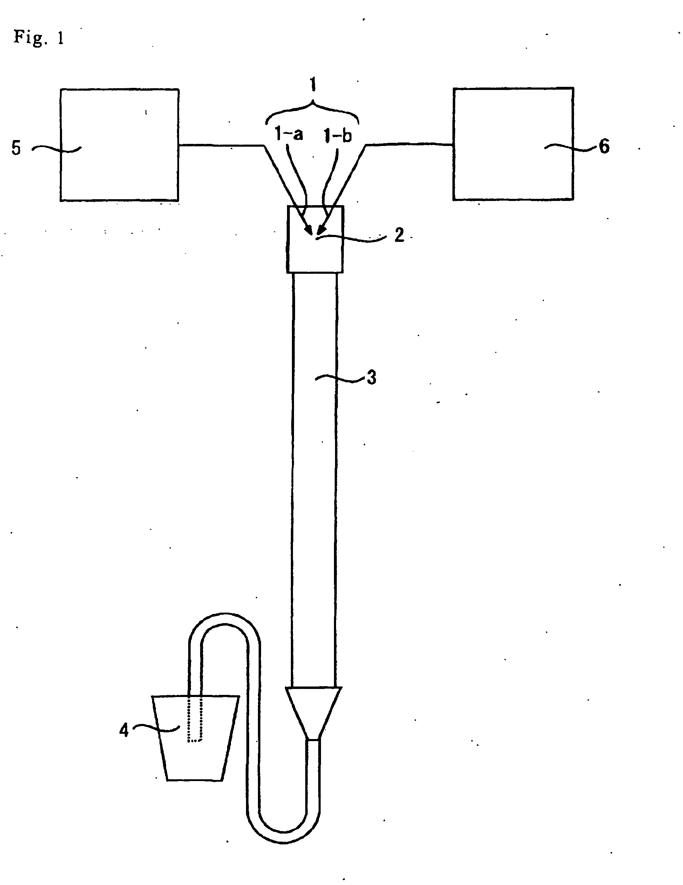

Hereinafter, one aspect of the manufacturing apparatus for polymer particles according to the present invention is described with reference to FIG. 1. However, the present invention is by no means limited thereto.

In a method including supplying a polymer solution and a polymer non-solvent to raw material solution supplying means 1, a supplying apparatus having storage means such as a container or a storage vessel for retaining each of two solutions or a plurality of solutions or pumping means such as a gear pump may be provided, for example. Further, as illustrated in FIG. 1, a polymer solution supplying apparatus 5 and an organic non-solvent supplying apparatus 6 for supplying an organic non-solvent obtained by mixing polymer non-solvents in advance may also be provided. In addition, a flow rate monitor for monitoring a flow rate of each solution, a pressure gauge, and the like may be provided.

The raw material solution supplying means 1 has only to be one capable of supplying a polymer solution and an organic non-solvent while combining and mixing the solutions, and may also be one for supplying a plurality of solutions from one supplying outlet. As illustrated in FIG. 1, it is preferred that polymer solution supplying means (1-a) for supplying a polymer solution and polymer non-solvent supplyingmeans (1-b) for supplying a polymer non-solvent be each separately provided.

The raw material solution supplying means 1 is formed by providing a supplying outlet and the like so that a plurality of solutions are combined in a space of an open system. Specific examples of the supplying outlet include a tube having an appropriate tube diameter, a spray nozzle, a screw outlet, an orifice outlet, and a discharge outlet.

A mixed solution combining unit 2 has only to be one capable of combining a polymer solution and a polymer non-solvent to be supplied and simultaneously combined and mixed, and may also be one having a volume which allows the temporary storage of a mixed solution obtained by combining a plurality of solutions. However, a long retention time in the mixed solution combining unit 2 results in the precipitation of polymer particles, and the particle diameter distribution of the resultant particles is broadened. Hence, preferred is one which allows the rapid transport of a mixed solution retained in the mixed solution combining unit 2 to a tubular body 3 downstream of the unit.

The manufacturing apparatus for polymer particles according to the present invention may have stirring means including various stirrers such as a static mixer, an in-line mixer, and a three-one motor in order to mix a plurality of solutions rapidly. In that case, however, there is a tendency that convection occurs to broaden a particle diameter distribution. From the viewpoint of narrowing the particle diameter distribution of the resultant polymer particles, stirring means such as a static mixer, an in-line mixer, and a mixing vessel equipped with various stirrers are preferably absent in the mixed solution combining unit 2 to the tubular body 3. However, an obstacle such as a mesh, a fabric, a non-woven fabric, or a punching metal may be provided in a flow path to make the mixed solution more uniform.

The tubular body 3 through which a mixed solution is passed is preferably one suitable for precipitating polymer particles while passing a polymer solution therethrough, is provided substantially vertically, and is preferably a straight tube free of a bending portion. The tubular body 3 may also be provided with a jacket and the like (not shown) as necessary to regulate the temperature of a mixed solution passing therethrough. The tubular body 3 has a length to complete the precipitation of polymer particles during the passage of the mixed solution through the tubular body, and the length is appropriately regulated under various conditions such as concentrations of a polymer solution and a polymer non-solvent and a flow rate of a mixed solution. Further, the tubular body 3 is provided substantially vertically and allows the mixed solution to naturally flow down therethrough in a laminar flow state.

A dispersion solution collecting unit 4 is one for collecting a dispersion solution of polymer particles discharged from the tubular body 3, and a solution vessel or the like may be appropriately used.

It is preferred that the tubular body 3 and the dispersion solution collecting unit 4 be placed in communication with each other. That is, the tubular body 3 and the dispersion solution collecting unit 4 may be connected with, for example, a tube or a pipe having flexibility so that a dispersion solution of polymer particles discharged from the tubular body 3 passes the same level of height as an inlet of the tubular body 3 and then flows down to be collected in the dispersion solution collecting unit 4.

The manufacturing apparatus for polymer particles according to the present invention may be provided with means for subjecting a dispersion solution of polymer particles to solid-liquid separation, such as a centrifuge, a decanter, or a filter.

The present invention also provides a manufacturing apparatus for polymer particles, the apparatus including: raw material solution supplying means for supplying a polymer solution and a polymer non-solvent; a spray nozzle for discharging supplied rawmaterial solutions to an open system after combining the solutions in a space of a closed system; a substantially vertical tubular body provided downstream of the spray nozzle; and a dispersion solution collecting unit provided downstream of the tubular body, in which: stirring means is absent in the mixed solution combining unit to the tubular body; and the tubular body has a length to complete the precipitation of polymer particles in the tubular body.

As described above, a nozzle equipped with a static mixer or a two fluid nozzle is preferably used as the spray nozzle.

The raw material solution supplying means is the same as described above except for being formed so that the means is directly connected to the spray nozzle and the supplied raw material solutions are combined in a space of a closed system.

The mixed solution combining unit, tubular body, dispersion solution collecting unit, and stirring means are the same as described above.

Examples

Hereinafter, examples of the present invention are described. However, the present invention is by no means limited thereto.

(Evaluation method)

Assessment on completion of particle growth: The resultant dispersion solution of the polymer spherical particles was filtered and an excess non-solvent was added to the filtrate. When any turbidity or precipitation was generated, the assessment "unprecipitated polymer components remained in the filtrate" was given. When no turbidity or precipitation was generated, the assessment "the precipitation of the particles was completed" was given.

- Change in back pressure (ΔP): A change in line back pressure (MPa/hr) 1 hour after the start of an operation was measured and was used as a measure for line clogging.

Number average particle diameter, volume average particle diameter, and particle diameter distribution index: The resultant polyamide porous spherical particles were measured for a number average particle diameter and a volume average particle diameter with Coulter Counter or based on SEM photograph observation results. The particle diameter distribution was expressed as a particle diameter distribution index (PDI), i.e., a relative value of a volume average particle diameter (Dv) to a number average particle diameter (Dn).

Hereinafter, a calculation method for a number average particle diameter (Dn), a volume average particle diameter (Dv), and a particle diameter distribution index (PDI) are described.

(Number average particle diameter Dn)

[Math. 2]

$$Dn = \sum_{i=1}^{n} Xi / n$$

(Volume average particle diameter Dv)

[Math. 3]

$$Dv = \sum_{i=1}^{n} Xi^4 / \sum_{i=1}^{n} Xi^3$$

In the equation: Xi represents each individual particle diameter; and n represents a measurement number.

(Particle diameter distribution index)

$$PDI=Dv/Dn$$

Degree of porosity: A degree of porosity was expressed as a relative value (roughness index (RI)) of a specific surface area (S) of each of porous particles to a specific surface area ($S_0$, (m²/kg)) of each of the same spherical particles.

$$RI=S/S_0$$

In the equation:

$$S_0=6/(\rho \times Dn),$$

provided that

$\rho$ (kg/m²) represents a true density of each of polymer particles; and Dn represents a number average particle diameter (m) ; and
S is an observed value.

Pore content: A pore content means a ratio of a pore volume to the total volume of polymer particles (total of a polymer volume and a pore volume). The pore content P (%) was determined with the following equation:

$$P\ (\%)=100 \times V/(V+1,000/\rho)$$

where: V (m³/kg) represents an accumulated pore volume in each particle of polymer particles; and $\rho$ (kg/m²) represents a true density of each of polymer particles.

Degree of crystallinity: A degree of crystallinity was calculated with the following equation after measuring heat of fusion by a DSC measurement method.

[Math. 4]

$$\chi\ =\ \Delta H_{obs}/\Delta H_m \times 100$$

$\chi$; a degree of crystallinity (%)
$\Delta H_{obs}$; heat of fusion of a sample (cal/g)
$\Delta H_m$; heat of fusion of a polymer (cal/g)

Polymer solution viscosity: A polymer solution viscosity was measured in accordance with the procedure described below using an E-type rotary viscometer. Each solution was charged into an airtight container and was kept in a thermostat bath at 30°C for 10 hours. A polymer solution and a non-solvent solution as measurement solutions, each of which had been prepared in advance, were measured using an E-type viscometer (manufactured by TOKYO KEIKI INC.: cone-and-plate-type rotary viscometer for high viscosity (EHD-type), cone rotor: 1°34') under a condition of a temperature of 25±0.1°C. The measurement was carried out three times to adopt an average value of the three measurement points. When a variation between the measurement points is 5% or more, the measurement was carried out additional two times to adopt an average value of the five measurement points (unit: poise (P)).

Mixed solution viscosity: A mixed solution viscosity $\eta_{mix}$ was estimated based on the following viscosity equation for a solution mixture in accordance with "physical property constant estimation method for engineers" P239 (written by Shuzo Ooe, originally printed in 1985, THE NIKKAN KOGYO SHIMBUN, LTD.) as to a viscosity of a mixed solution of a polymer solution and a non-solvent.

[Math. 5]

$$\frac{\eta_{mix}}{\rho_{mix}} = \phi_1 \frac{\eta_1}{\rho_1} e^{\phi_2 \alpha_2^*} + \phi_2 \frac{\eta_2}{\rho_2} e^{\phi_1 \alpha_1^*}$$

$$\alpha_1^* = -1.7 \ln \frac{\eta_2 \rho_1}{\eta_1 \rho_2}$$

$$\alpha_2^* = 0.27 \ln \frac{\eta_2 \rho_1}{\eta_1 \rho_2} + \left(1.3 \ln \frac{\eta_2 \rho_1}{\eta_1 \rho_2}\right)^{1/2}$$

In the equations: $\eta$ represents a viscositys; $\varphi$ represents a volume fraction; and p represents a density. The subscript 1 is for a non-solvent, the subscript 2 is for a polymer solution, and the subscript mix is for a mixed solution.

Example 1

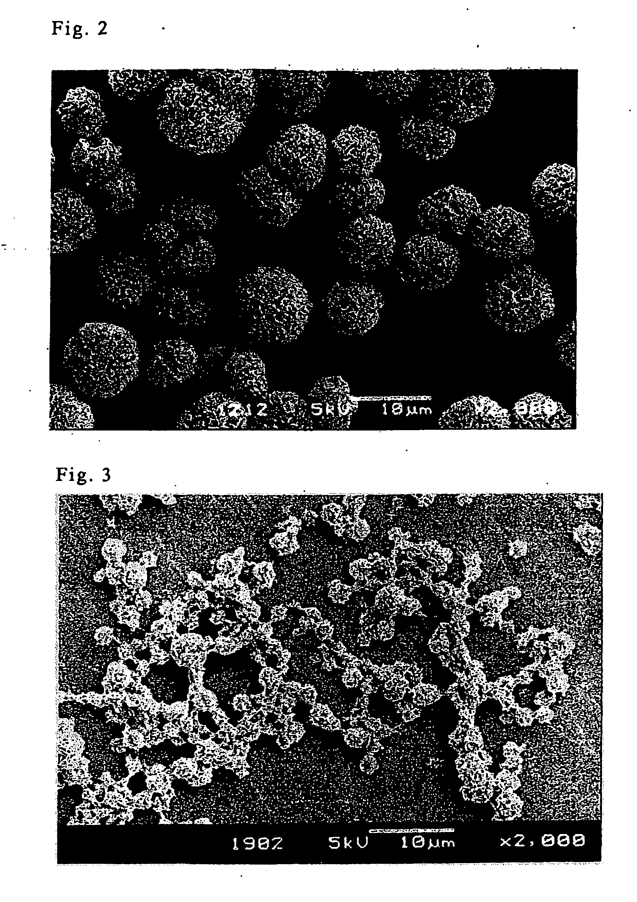

Polyamide porous spherical particles were manufactured using an apparatus whose conceptual diagram was illustrated in FIG. 1. A polyamide solution formed of 10 parts by mass of polyamide 6 (1013B manufactured by Ube Industries, Ltd.) and 90 parts by mass of a mixed solvent formed of phenol (90% by mass) and methanol (10% by mass) was continuously supplied with a gear pump at a solution temperature of 25°C and a flow rate of 273 g/min. Further, an organic non-solvent formed of 75 parts by mass of methanol and 25 parts by mass of water was continuously supplied with a cascade pump at a solution temperature of 18°C and a flow rate 1,938 g/min.
Both of the solutions discharged from separate tubing nozzles were combined in an open system in a space of a tubular body and simultaneously dispersed and mixed. Next, the mixed solution was allowed to flow down through the tubular body, which had a long cylindrical shape and was provided substantially vertically, in a substantially laminar flow without stirring. The inner diameter of a precipitation tube was 0.0976 m and the average flow rate of the mixed solution was 0.00561 m/s. The polyamide solution had a viscosity of 0.2 Pa·s and a density of 1,039.8 kg/m³. The non-solvent had a viscosity of 0.00124 Pa·s and a density of 859.2 kg/m³. The tubular body had a length which allowed the retention of the mixed solution flowing down therethrough during a retention time (about 10 minutes) to complete the growth of polyamide porous particles. After that, the polyamide porous particles were passed through a collection tube as a flexible pipe while being suspended in a dispersion solution state and were collected in a collection vessel. The dispersion solution of the polyamide porous spherical particles immediately after the collection was assessed for completion of particle growth. As a result, the completion of the precipitation of the particles was confirmed. The resultant dispersion solution of the polyamide porous spherical particles had a solution temperature of 20 °C. The mixed solution flowing down through the tubular body had a Reynolds number of 281.2, revealing that the flow in the tube was in a laminar flow state. Even 2 hours after the start of an operation, no increase in line back pressure was observed and the operation was stable.
The collected dispersion solution was subjected to solid-liquid separation using a centrifuge every 20 minutes to separate polyamide porous spherical particles. The particles were dried to afford polyamide porous spherical particles having a total weight of 2.1 kg in a dry powder state.
The resultant polyamide porous spherical particles were observed with a scanning electron microscope and were found to be porous uniform particles. Further, the particles were examined with a transmission electron microscope and were found to be single spherulite particles radially grown from the center of the particles. FIG. 2 shows a scanning electron microscope photograph of the resultant polyamide porous particles.
The polyamide porous spherical particles obtained as described above were measured with Coulter Counter for a particle diameter and a particle diameter distribution. As a result, irrespective of the collection time, all of the particles each had a number average particle diameter (Dn) of 9.0 $\mu$m, a volume average particle diameter (Dv) of 11.4 $\mu$m, and a particle distribution index (PDI) of 1.27. Further, the particles each had a BET specific surface area of 14.6 m²/g, a pore content of 48%, a degree of porosity of 25, and a degree of crystallinity of 50%.

Example 2

This example was carried out under the same condition as in Example 1 except that the flow rate of the polyamide solution was set to 524 g/min and the flow rate of the non-solvent was set to 3, 721 g/min. The average flow rate of the mixed solution was 0.01077 m/s. The tubular body had a length which allowed the retention of the mixed solution flowing down therethrough during a retention time (about 10 minutes) to complete the growth of polyamide porous particles. After that, the polyamide porous particles were passed through a collection tube as a flexible pipe while being suspended in a dispersion solution state and were collected in a collection vessel. The dispersion solution of the polyamide porous spherical particles immediately after the collection was assessed for completion of particle growth. As a result, the completion of the precipitation of the particles was confirmed. The resultant dispersion solution of the polyamide porous spherical particles had a solution temperature of 20°C. The mixed solution flowing down through the tubular body had a Reynolds number of 540.1, revealing that the flow in the tube was in a laminar flow state. Even 2 hours after the start of an operation, no increase in line back pressure was observed and the operation was stable.

The collected dispersion solution was subjected to solid-liquid separation using a centrifuge to separate polyamide porous spherical particles. The particles were dried to afford polyamide porous spherical particles having a weight of 2.0 kg in a dry powder state.

The resultant polyamide porous spherical particles were observed with a scanning electron microscope and were found to be porous uniform part ic les. Further, the particles were examined with a transmission electron microscope and were found to be single spherulite particles radiallygrown from the center of the particles.

The polyamide porous spherical particles obtained as described above were measured with Coulter Counter for a particle diameter and a particle diameter distribution. As a result, irrespective of the collection time of the dispersion solution, the particles each had a number average particle diameter (Dn) of 7.2 $\mu$m, a volume average particle diameter (Dv) of 8.6 $\mu$m, and a particle distribution index (PDI) of 1.19. Further, the particles each had a BET specific surface area of 18.2 m$^2$/g, a pore content of 48%, a degree of porosity of 25, and a degree of crystallinity of 48%.

Comparative Example 1

This comparative example was carried out under the same condition as in Example 1 except that the flow rate of the polyamide solution was set to a flow rate of 5,240 g/min and the flow rate of the non-solvent was set to 37,210 g/min. The average flow rate of the mixed solution was 0.1077 m/s. Although the same tubular body as used in Example 1 was used, the flow rate of the mixed solution was high, and hence the mixed solution flowing down through the tubular body was not able to be retained during a retention time (about 10 minutes) to complete the growth of polyamide porous particles. The dispersion solution of the polyamide porous spherical particles immediately after the collection was assessed for completion of particle growth. As a result, unprecipitated polyamide components were found to remain in the filtrate. The resultant dispersion solution of the polyamide porous spherical particles had a solution temperature of 19°C. The mixed solution flowing down through the tubular body had a Reynolds number of 5,401, revealing that the flow in the tube was not in a laminar flow state . Even 2 hours after the start of an operation, no increase in line back pressure was observed and the operation was stable.

The collected dispersion solution was subjected to solid-liquid separation using a centrifuge to separate polyamide porous spherical particles. The particles were dried to afford polyamide particles having a weight of 2.0 kg in a dry powder state.

The resultant polyamide particles were observed with a scanning electron microscope and were found to form a bulky network structure in which particles each having a substantially spherical shape aggregated. FIG. 3 shows a scanning electron microscope photograph of the resultant structure.

Example 3

This example was carried out under the same condition as in Example 1 except that the flow rate of the polyamide solution was set to a flow rate of 349 g/min, the flow rate of the non-solvent was set to 2,480 g/min, and the temperature of the non-solvent was set to 5°C. The mixed solution had an average flow rate of 0.007089 m/s. The non-solvent had a viscosity of 0.00172 Pa·s and a density of 871.3 kg/m$^3$. The tubular body had a length which allowed the retention of the mixed solution flowing down therethrough during a retention time (about 10 minutes) to complete the growth of polyamide porous particles. After that, the polyamide porous particles were passed through a collection tube as a flexible pipe while being suspended in a dispersion solution state and were collected in a collection vessel. The dispersion solution of the polyamide porous spherical particles immediately after the collection was assessed for completion of particle growth. As a result, the completion of the precipitation of the particles was confirmed. The resultant dispersion solution of the polyamide porous spherical particles had a solution temperature of 6.5°C. The mixed solution flowing down through the tubular body had a Reynolds number of 264.4, revealing that the flow in the tube was in a laminar flow state. Even 2 hours after the start of an operation, no increase in line back pressure was observed and the operation was stable.

The collected dispersion solution was subjected to solid-liquid separation using a centrifuge to separate polyamide porous spherical particles. The particles were dried to afford polyamide porous spherical particles having a weight of 1.5 kg in a dry powder state.

The resultant polyamide porous spherical particles were observed with a scanning electron microscope and were found to be porous uniform particles. Further, the particles were examined with a transmission electron microscope and were found to be single spherulite particles radially grown from the center of the particles.

The polyamide porous spherical particles obtained as described above were measured with Coulter Counter for a particle diameter and a particle diameter distribution. As a result, irrespective of the collection time of the dispersion solution, the particles each had a number average particle diameter (Dn) of 6.0 $\mu$m, a volume average particle diameter (Dv) of 8.3 $\mu$m, and particle distribution index (PDI) of 1.38. Further, the particles each had a BET specific surface area of 19.7 m$^2$/g, a pore content of 49%, a degree of porosity of 23, and a degree of crystallinity of 46%.

Example 4

In Example 1, the polyamide solution and the organic non-solvent were internally mixed once in a supplying tube using a nozzle equipped with a static mixer and were then sprayed from the nozzle to introduce a mixed solution into a cylinder. An operation was started at an initial back pressure of 0.2 Mpa and the operation was carried out for 1 hour, resulting in a back pressure of 0.6 MPa.

The collected dispersion solution was entirely collected every 20 minutes and was subjected to solid-liquid separation using a centrifuge to separate polyamide porous spherical particles. The particles were dried to afford three kinds of polyamide porous spherical particles (0 to 20 minutes, 20 minutes to 40 minutes, and 40 minutes to 60 minutes) in a dry powder state.

The resultant polyamide porous spherical particles were observed with a scanning electron microscope and were found to be porous uniform particles. Further, the particles were examined with a transmission electron microscope and were found to be single spherulite particles radially grown from the center of the particles.

The respective polyamide porous spherical particles obtained as described above were measured with Coulter Counter for a particle diameter and a particle diameter distribution. As a result, the particles each had a number average particle diameter (Dn) of 9.5 $\mu$m (0 to 20 minutes), 6.8 $\mu$m (20 to 40 minutes), and 5.8 $\mu$m (40 to 60 minutes) and a volume average particle diameter (Dv) of 12.0 $\mu$m (0 to 20 minutes), 8.0 $\mu$m (20 to 40 minutes), and 6.6 $\mu$m (40 to 60 minutes) depending on a period for the collection of the dispersion solution, and particles each having a smaller particle diameter were obtained with time.

The particles each had a specific surface area of 10.6 m$^2$/g (0 to 20 minutes), 11.1 m$^2$/g (20 to 40 minutes), and 12.9 m$^2$/g (40 to 60 minutes) depending on a period for the collection of the dispersion solution.

Example 5

A polyamide solution formed of 20 parts by mass of polyamide 6 (1010X1 manufactured by Ube Industries, Ltd.) and 80 parts by mass of a mixed solvent formed of phenol (90% by mass) and isopropanol (10% by mass) was continuously supplied with a gear pump at a solution temperature of 25°C and a flow rate of 277 g/min. Further, an organic non-solvent formed of 66.6 parts by mass of isopropanol and 33.3 parts by mass of water was continuously supplied with a cascade pump at a solution temperature of 15°C and a flow rate of 2,560 g/min.

Both of the solutions discharged from separate tubing nozzles were combined in an open system in the atmosphere and were simultaneously dispersed and mixed. Next, the mixed solution was allowed to flow down through the tubular body, which had a long cylindrical shape and was provided substantially vertically, in a substantially laminar flow without stirring. The inner diameter of a precipitation tube was 0.0976 m and the average flow rate of the mixed solution was 0.007128 m/s. The polyamide solution had a viscosity of 0.92 Pa·s and a density of 1,049.5 kg/m$^3$. The non-solvent had a viscosity of 0.00376 Pa·s and a density of 872 kg/m$^3$. The tubular body had a length which allowed the retention during a retention time of 10 minutes to complete the growth of polyamide porous particles. After that, the polyamide porous particles were passed through a collection tube as a flexible pipe while being suspended in a dispersion solution state and were collected in a collection vessel. The dispersion solution of the polyamide porous spherical particles immediately after the collection was assessed for completion of particle growth. As a result, the completion of the precipitation of the particles was confirmed. The resultant dispersion solution of the polyamide porous spherical particles had a solution temperature of 17°C. The mixed solution flowing down through the tubular body had a Reynolds number of 125.5, revealing that the flow in the tube was in a laminar flow state. Even 2 hours after the start of an operation, no increase in line back pressure was observed and the operation was stable.

The collected dispersion solution was subjected to solid-liquid separation using a centrifuge to separate polyamide porous spherical particles. The particles were dried to afford polyamide porous spherical particles having a weight of 4.0 kg in a dry powder state.

The resultant polyamide porous spherical particles were observed with a scanning electron microscope and were found to be porous uniform particles. Further, the particles were examined with a transmission electron microscope and were found to be single spherulite particles radially grown from the center of the particles

The polyamide porous spherical particles obtained as described above were measured with Coulter Counter for a particle diameter and a particle diameter distribution. As a result, irrespective of the collection time of the dispersion solution, the particles each had a number average particle diameter (Dn) of 6.5 $\mu$m, a volume averageparticle diameter (Dv) of 7.3 $\mu$m, anda particle distribution index (PDI) of 1.12. Further, the particles each had a BET specific surface area of 22.0 m$^2$/g, a pore content of 48%, a degree of porosity of 27, and a degree of crystallinity of 51%

Reference Example 1

In a dissolution vessel equipped with a stirring apparatus, purified anhydrous p-phenylenediamine (PPD) was added to anhydrous N-methyl-2-pyrrolidone to prepare a solution. Next, purified anhydrous 3, 3', 4, 4'-biphenyltetracarboxylic dianhydride (s-BPDA) was added in small portions with stirring so that the molar ratio of s-BPDA to PPD reached 0.940 and the mixture was allowed to react sufficiently, to thereby afford a polyamic acid solution containing polyamic acid, which was a polyimide precursor, at a weight ratio of 3.0%. A raw material solution formed of 2.5 parts by mass of polyamic acid, 80.8 parts by mass of NMP, and 16.7 parts by mass of isopropanol was produced by loading isopropanol to the solution with stirring. The resultant solution viscosity was 6 poises and the limiting viscosity number of polyamic acid was 0.4.

Reference Example 2

A raw material solution was obtained by carrying out the same operation except for replacing anhydrous p-phenylenediamine (PPD) purified in Reference Example 1 by 4,4'-diaminodiphenyl ether (DADE). The solution viscosity was 5 poises and the limiting viscosity number of polyamic acid was 0.35.

Reference Example 3

(Preparation of aging solution)

150 g (2.8 mol) of butadiene are loaded in a 400 mL autoclave aging tank subjected to nitrogen replacement. 0.6 mmol of cobalt octoate and 1.8 mmol of triethyl aluminum were added and the mixture was stirred at room temperature for 5 hours.

(Polymerization)

600 mL of ion-exchanged water, 2 g of polyvinyl alcohol, 120 mL of methylene chloride, and 0.477 mol of acetone were added in a 1.5 L autoclave subjected to nitrogen replacement and the temperature was set to 10°C with stirring. The aging solution prepared above was added in the autoclave and was dispersed at 10°C for 10 minutes, and 0.8 mmol of carbon disulfide was then added to initiate polymerization. The polymerization was carried out at 30°C for 60 minutes. After the polymerization, unreacted monomers were removed, an antioxidant was added, and polyvinyl alcohol was washed with water. The resultant was filtered with a paper filter and was then dried to afford SPB. The yield of SPB was 130 g and the melting point of SPB was 150°C. The reduction viscosity was 1.2. The 1,2-bond content based on $^{13}$C-NMR was 85% and the syndiotacticity in the 1.2-bond was 100%.

Example 6 (Polyamic acid porous fine particles)

Polyamic acid particles were manufactured using an apparatus whose conceptual diagram was illustrated in FIG. 1. The polyamic acid solution containing 2.5 parts by mass of polyamic acid of Reference Example 1 was loaded to the supplying apparatus 5 in a sufficient amount and was continuously supplied with a gear pump to the mixed solution combining unit 2 at a solution temperature of 30°C and a flow rate of 201 g/min. Further, anorganic non-solvent formed of 70 parts by mass of isopropanol and 35 parts by mass of water was loaded to the non-solvent supplying apparatus 6 in a necessary and sufficient amount, and at the same time as the supply of the polyamic acid solution, was continuously supplied with a cascade pump to the mixed solution combining unit 2 at a solution temperature of 18°C and a flow rate of 2,100 g/min.

Both of the solutions discharged from separate tubing nozzles were combined in an open system in the atmosphere and were simultaneously dispersed and mixed. Next, the mixed solution was allowed to flow down through the tubular body 3, which had a long cylindrical shape and was provided substantially vertically, in a substantially laminar flow without stirring. The tubular body 3 had a length which allowed the retention of the mixed solution flowing down therethrough during a retention time (about 10 minutes) to complete the growth of polyamic acid particles. After that, the polyamic acid particles were passed through a collection tube as a flexible pipe while being suspended in a dispersion solution state and were collected in a collection vessel. The resultant dispersion solution of the polyamic acid porous fine particles had a solution temperature of 19°C.

Even 2 hours after the start of an operation, no increase in line back pressure was observed and the operation was stable. The mixed solution flowing down through the tubular body had a Reynolds number of 271.7, revealing that the flow in the tube was in a laminar flow state.

The dispersion solution of the polyamic acid porous fine particles immediately after the collection was assessed for completion of particle growth. As a result, the completion of the precipitation of the particles was confirmed. Further, the dispersion solution was filtered to separate polyamic acid porous fine particles. The particles were then dried to afford polyamic acid porous fine particles having a weight of 0.4 kg in a dry powder state.

The resultant polyamic acidporous fine particles were observed with a scanning electron microscope and were found to be porous particles each having a spherical shape and a relatively uniform particle diameter.

The resultant polyamic acid spherical particles were measured with Coulter Counter for a particle diameter and a particle diameter distribution. As a result, the particles each had a number average particle diameter (Dn) of 3.5 $\mu$m, a volume average particle diameter (Dv) of 4.8 $\mu$m, and a particle distribution index (PDI) of 1.37. Further, the particles each had a BET specific surface area of 5.0 m$^2$/g.

Example 7 (Polyamic acid porous fine particles)

Polyamic acid porous fine particles were obtained by the same operation as in Example 6 except for using as the raw material solution the solution produced in Reference Example 2 in place of Reference Example 1. The collected powders had a weight of 0.45 kg in a dry powder state. The powders were observed with a scanning electron microscope and were found to be porous particles each having a spherical shape and having a relatively uniform particle diameter. Further, the mixed solution flowing down through the tubular body had a Reynolds number of 273.8, revealing that the flow in the tube was in a laminar flow state.

The resultant polyamic acid porous fine particles were measured with Coulter Counter for a particle diameter and a particle diameter distribution. As a result, the particles each had a number average particle diameter (Dn) of 3. 8 $\mu$m, a volume average particle diameter (Dv) of 5.3 $\mu$m, and a particle distribution index (PDI) of 1.39. Further, the particles each had a BET specific surface area of 4.1 m$^2$/g.

Example 8 (Polyimide porous fine particles)

The polyamic acid porous fine particles obtained in Example 6 were left to stand still in a crucible made of alumina and the crucible was covered with carbon paper. Next, the crucible was set in an electric furnace, was heated in the atmosphere to 400°C at a temperature increasing rate of 10°C/min, was kept at the same temperature for 15 minutes, and was then cooled naturally to afford polyimide spherical particles.

The resultant polyimide porous fine particles were measured with Coulter Counter for a particle diameter and a particle diameter distribution. As a result, the particles each had a number average particle diameter (Dn) of 3.2 $\mu$m, a volume average particle diameter (Dv) of 4.3 $\mu$m, and a particle distribution index (PDI) of 1.35. Further, the particles each had a BET specific surface area of 4.6 m$^2$/g

Example 9 (Polyimide porous fine particles)

The polyamic acid porous fine particles obtained in Example 7 were left to stand still in a crucible made of alumina and the crucible was covered with carbon paper. Next, the crucible was set in an electric furnace, was heated in the atmosphere to 330°C at a temperature increasing rate of 10°C/min, was kept at the same temperature for 15 minutes, and was then cooled naturally to afford polyimide porous fine particles.

The resultant polyimide porous fine particles were measured with Coulter Counter for a particle diameter and a particle diameter distribution. As a result, the particles each had a number average particle diameter (Dn) of 3.3 $\mu$m, a volume average particle diameter (Dv) of 4.4 $\mu$m, and a particle distribution index (PDI) of 1.33. Further, the particles each had a BET specific surface area of 3.5 m$^2$/g.

Example 10 (SPB porous fine particles)

In a dissolution vessel equipped with a stirring apparatus, SPB obtained in Reference Example 3 and p-xylene were stirred at 120°C for 2 hours to prepare a solution containing 0.6% by mass of SPB. The solution was loaded to the supplying apparatus 5 in a sufficient amount and was continuously supplied with a gear pump to the mixed solution combining unit 2 at a solution temperature of 30°C and a flow rate of 105 g/min. Further, an organic non-solvent formed of 80 parts by mass of methanol and 20 parts by mass of water was loaded to the non-solvent supplying apparatus 6 in a necessary and sufficient amount, and at the same time as the supply of the SPB solution, was continuously supplied with a cascade pump to the mixed solution combining unit 2 at a solution temperature of 20°C and a flow rate of 2,100 g/min.

Both of the solutions discharged from separate tubing nozzles were combined in an open system in the atmosphere and were simultaneously dispersed and mixed. Next, the mixed solution was allowed to flow down through the tubular body 3, which had a long cylindrical shape and was provided substantially vertically, in a substantially laminar flow without stirring. The tubular body 3 had a length which allowed the retention of the mixed solution flowing down therethrough during a retention time (about 10 minutes) to complete the growth of SPB particles. After that, the SPB particles were passed through a collection tube as a flexible pipe while being suspended in a dispersion solution state and were collected in a collection vessel. The resultant dispersion solution of the SPB particles had a solution temperature of 20°C.

Even 2 hours after the start of an operation, no increase in line back pressure was observed and the operation was stable. Further, the mixed solution flowing down through the tubular body had a Reynolds number of 41.0, revealing that the flow in the tube was in a laminar flow state.

The dispersion solution of the SPB particles immediately after the collection was assessed for completion of particle growth. As a result, the completion of the precipitation of the particles was confirmed. Further, the dispersion solution was filtered to separate SPB particles. The particles were then dried to afford SPB particles having a weight of 0.1 kg in a dry powder state.

The resultant SPB particles were observed with a scanning electron microscope and were found to be porous particles each having a spherical shape, having a relatively unform particle diameter, and having roughness on the surface.

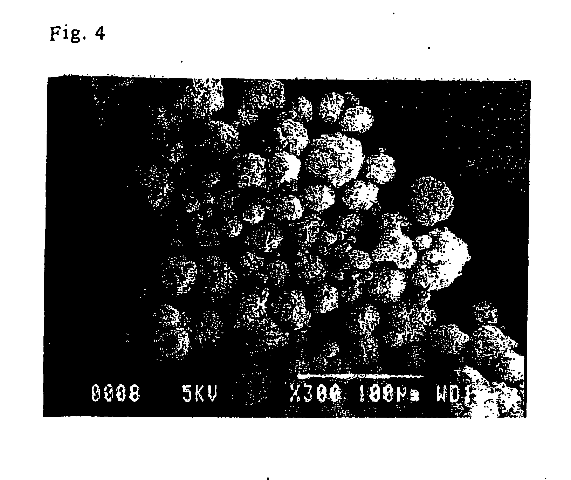

FIG. 4 shows a scanning microscope photograph. The resultant SPB particles were measured with Coulter Counter for a particle diameter and a particle diameter distribution. As a result, the particles each had a number average particle diameter (Dn) of 15.6 $\mu$m, a volume average particle diameter (Dv) of 28.8 $\mu$m, and a particle distribution index (PDI) of 1.84. Further, the particles each had a BET specific surface area of 3.5 $m^2$/g.

Example 11

A polyamide solution formed of 20 parts by mass of polyamide 6 (1010X1 manufactured by Ube Industries, Ltd.) and 100 parts by mass of a mixed solvent formed of phenol (80% by mass), isopropanol (10% by mass), and water (10% by mass) was continuously supplied with a gear pump at a solution temperature of 25°C and a flow rate of 597 g/min. Further, an organic non-solvent formed of 53.7 parts by mass of isopropanol and 46.3 parts by mass of water was continuously supplied with a cascade pump at a solution temperature of 15°C and a flow rate of 2,553 g/min.

Both of the solutions were mixed and stirred in the interior of a two fluid nozzle and were then sprayed from the nozzle so that the solutions were uniformly dispersed toward a solution surface in a tubular body. Next, the mixed solution was allowed to flow down through the tubular body, which had a long cylindrical shape and was provided substantially vertically, in a substantially laminar flow without stirring. The inner diameter of a precipitation tube was 0.0976 m and the average flow rate of the mixed solution was 0.007571 m/s. The polyamide solution had a viscosity of 0.78 pa ·s and a density of 1,045.2 kg/$m^3$. The non-solvent had a viscosity of 0.00330 Pa·s and a density of 900 kg/$m^3$. The tubular body had a length which allowed the retention of the mixed solution flowing down therethrough during a retention time (about 10 minutes) to complete the growth of polyamide porous particles. After that, the polyamide porous particles were passed through a collection tube as a flexible pipe while being suspended in a dispersion solution state and were collected in a collection vessel. The dispersion solution of the polyamide porous spherical particles immediately after the collection was assessed for completion of particle growth. As a result, the completion of the precipitation of the particles was confirmed. The resultant dispersion solution of the polyamide porous spherical particles had a solution temperature of 19°C. The mixed solution flowing down through the tubular body had a Reynolds number of 121.3, revealing that the flow in the tube was in a laminar flow state. Even 1 hour after the start of an operation, no increase in line back pressure was observed and the operation was stable. Further, no gel generation was confirmed in the interior of the nozzle and the external spray outlet.

The collected dispersion solution was subjected to solid-liquid separation using a centrifuge to separate polyamide porous spherical particles. The particles were dried to afford polyamide porous spherical particles having a weight of 4.0 kg in a dry powder state.

The resultant polyamide porous spherical particles were observed with a scanning electron microscope and were found to be porous uniform particles. Further, the particles were examined with a transmission electron microscope and were found to be single spherulite particles radially grown from the center of the particles.

The polyamide porous spherical particles obtained as described above were measured with Coulter Counter for a particle diameter and a particle diameter distribution. As a result, irrespective of a period for the collection of the dispersion solution, the particles each had a number average particle diameter (Dn) of 4.7 $\mu$m, a volume average particle diameter (Dv) of 5.2 $\mu$m, and a particle distribution index (PDI) of 1.10. Further, the particles each had a BET specific surface area of 22.5 m$^2$/g, a pore content of 62%, a degree of porosity of 21, and a degree of crystallinity of 49%.

Example 12

A polyamide solution formed of 30 parts by mass of polyamide 6 (1010X1 manufactured by Ube Industries, Ltd.) and 95 parts by mass of a mixed solvent formed of phenol (70% by mass), isopropanol (15% by mass), and water (10% by mass) was continuously supplied with a gear pump at a solution temperature of 25°C and a flow rate of 336 g/min. Further, an organic non-solvent formed of 52 parts by mass of isopropanol and 48 parts by mass of water was continuously supplied with a cascade pump at a solution temperature of 15°C and a flow rate of 2,814 g/min.

Both of the solutions were mixed and stirred in the interior of a two fluid nozzle and were then sprayed from the nozzle so that the solutions were uniformly dispersed toward a solution surface in a tubular body. Next, the mixed solution was allowed to flow down through the tubular body, which had a long cylindrical shape and was provided substantially vertically, in a substantially laminar flow without stirring. The inner diameter of a precipitation tube was 0.0976 m and the average flow rate of the mixed solution was 0.007633 m/s. The polyamide solution had a viscosity of 2.15 Pa·s and a density of 1,037.4 kg/m$^3$. The non-solvent had a viscosity of 0.00330 Pa·s and a density of 900 kg/m$^3$. The tubular body had a length which allowed the retention of the mixed solution flowing down therethrough during a retention time (about 10 minutes) to complete the growth of polyamide porous particles. After that, the polyamide porous particles were passed through a collection tube as a flexible pipe while being suspended in a dispersion solution state and were collected in a collection vessel. The dispersion solution of the polyamide porous spherical particles immediately after the collection was assessed for completion of particle growth. As a result, the completion of the precipitation of the particles was confirmed. The resultant dispersion solution of the polyamide porous spherical particles had a solution temperature of 19°C. The mixed solution flowing down through the tubular body had a Reynolds number of 145.2, revealing that the flow in the tube was in a laminar flow state. Even 2 hours after the start of an operation, no increase in line back pressure was observed and the operation was stable. Further, no gel generation was confirmed in the interior of the nozzle and the external spray outlet.

The collected dispersion solution was subjected to solid-liquid separation using a centrifuge to separate polyamide porous spherical particles. The particles were dried to afford polyamide porous spherical particles having a weight of 6.0 kg in a dry powder state.

The resultant polyamide porous spherical particles were observed with a scanning electron microscope and were found to be porous uniform particles. Further, the particles were examined with a transmission electron microscope and were found to be single spherulite particles radially grown from the center of the particles.

The polyamide porous spherical particles obtained as described above were measured with Coulter Counter for a particle diameter and a particle diameter distribution. As a result, irrespective of the collection time of the dispersion solution, the particles each had a number average particle diameter (Dn) of 6 .5 $\mu$m, a volume average particle diameter (Dv) of 7.5 $\mu$m, and a particle distribution index (PDI) of 1.15. Further, the particles each had a BET specific surface area of 58.6 m$^2$/g, a pore content of 62%, a degree of porosity of 74.2, and a degree of crystallinity of 50%.

Industrial Applicability

As described in detail above, according to the manufacturing method for polymer particles and the manufacturing apparatus for polymer particles of the present invention, there can be provided polymer particles which have a stable particle diameter distribution even when the polymer particles are kept in a dispersion solution state. Hence, the manufacturing method and the manufacturing apparatus are extremely useful for industrial applications.

**Claims**

1. A method for manufacturing polymer particles, comprising:

mixing a polymer solution, which is obtained by dissolving a polymer in a good solvent, and a polymer non-solvent, which is a non-solvent for the polymer and has compatibility with the good solvent, in a continuous or intermittent manner; and
allowing the mixed solution of the polymer solution and the polymer non-solvent to flow down through a tubular body provided substantially verticallyso that the Reynolds number is 4,000 or less, thereby completing precipitation of polymer particles.

2. The method for manufacturing polymer particles according to claim 1, wherein the mixing of the polymer solution and the polymer non-solvent is carried out by a method including combining the polymer solution and the polymer non-solvent In an open system, or a method including discharging the polymer solution and the polymer non-solvent to an open system after combining the polymer solution and the polymer non-solvent in the space of a closed system.

3. The method for manufacturing polymer particles according to claim 1, wherein the allowing a mixed solution to flow down comprises allowing a mixed solution to naturally flow down through a tubular body.

4. The method for manufacturing polymer particles according to claim 1, wherein the mixed solution is allowed to flow down through the tubular body so that the Reynolds number is 2,100 or less.

5. The method for manufacturing polymer particles according to claim 1, wherein the flow rate mass ratio of the polymer solution to the polymer non-solvent is 1:1 to 1:25.

6. The method for manufacturing polymer particles according to claim 5, wherein a flow rate mass ratio of the polymer solution to the polymer non-soivent is 1:3 to 1:25.

7. The method for manufacturing polymer particles according to claim 1, further comprising collecting polymer particles in a dispersion solution state.

8. The method for manufacturing polymer particles according to claim 1, wherein the polymer particle is substantially spherical.

9. The method for manufacturing polymer particles according to claim 1, wherein the polymer particle comprises a porous particle or a particle having an rough structure
on a surface thereof.

10. The method for manufacturing polymer particles according to claim 1, wherein the polymer comprises a polyimide precursor or a polyimide.

11. The method for manufacturing polymer particles according to claim 1, wherein the polymer comprises a polybutadiene.

12. The method for manufacturing polymer particles according to claim 1, wherein the polymer comprises a polyamide.

13. The method for manufacturing polymer particles according to claim 12, wherein the polymer particle has a spherulite structure.

14. An apparatus for manufacturing polymer particles, the apparatus comprising:

   raw material solution supplying means for supplying a polymer solution and a polymer non-solvent;
   a mixed solution combining unit for combining and mixing supplied raw material solutions in an open system;
   a substantially vertical tubular body provided downstream of the mixed solution combining unit; and
   a dispersion solution collecting unit provided downstream of the tubular body,
   wherein:

      stirring means is absent in the mixed solution combining unit to the tubular body;
      the tubular body has a length to complete precipitation of polymer particles in the tubular body; and
      the apparatus is composed to allowing the mixed solution of the polymer solution and the polymer non-solvent to flow down through the tubular body so that the Reynolds number is 4,000 or less.

15. The manufacturing apparatus for polymer particles according to claim 14, wherein the manufacturing apparatus comprises, as the raw material solution supplying means, polymer solution supplying means for supplying a polymer solution and non-solvent supplying means for supplying a polymer non-solvent separately.

16. The manufacturing apparatus for polymer particles according to claim 14, wherein the tubular body and the dispersion solution collecting unit are placed in communication with each other.

17. An apparatus for manufacturing polymer particles, the apparatus comprising:

raw material solution supplying means for supplying a polymer solution and a polymer non-solvent;
a spray nozzle for discharging supplied raw material solutions to an open system after combining the raw material solutions in a space of a closed system;
a substantially vertical tubular body provided downstream of the spray nozzle; and
a dispersion solution collecting unit provided downstream of the tubular body,
wherein:

stirring means is absent in the mixed solution combining unit to the tubular body;
the tubular body has a length to complete precipitation of polymer particles in the tubular body; and
the apparatus is composed to allowing the mixed solution of the polymer solution and the polymer non-solvent to flow down through the tubular body so that the Reynolds number is 4,000 or less.

**Patentansprüche**

1. Verfahren zur Herstellung von Polymerpartikeln, umfassend:

Mischen einer Polymerlösung, die durch Lösen eines Polymers in einem guten Lösungsmittel erhalten wird, und eines Polymer-nicht-Lösungsmittels, welches ein Nicht-Lösungsmittel für das Polymer ist und eine Kompatibilität mit dem guten Lösungsmittel aufweist, in kontinuierlicher oder unterbrochener Art und Weise; und Fließen-lassen der Mischlösung aus der Polymerlösung und dem Polymer-nicht-Lösungsmittel durch einen Rohrkörper, der im Wesentlichen vertikal angeordnet ist, so dass die Reynolds-Zahl 4000 oder weniger ist, wodurch die Ausfällung der Polymerpartikel vervollständigt wird.

2. Verfahren zur Herstellung von Polymerpartikeln nach Anspruch 1, wobei das Mischen der Polymerlösung und des Polymer-nicht-Lösungsmittels durch ein Verfahren durchgeführt wird, das Kombinieren der Polymerlösung und des Polymer-nicht-Lösungsmittels in einem offenen System einschließt, oder durch ein Verfahren, das Entnahme der Polymerlösung und des Polymer-nicht-Lösungsmittels in ein offenes System nach Kombinieren der Polymerlösung und des Polymer-nicht-Lösungsmittels im Raum eines geschlossenen Systems umfasst.

3. Verfahren zur Herstellung von Polymerpartikeln nach Anspruch 1, wobei das Herunterfließenlassen einer Mischlösung das natürliche Herunterfließeniassen einer Mischlösung durch einen Rohrkörper umfasst.

4. Verfahren zur Herstellung von Polymerpartikeln nach Anspruch 1, wobei man die Mischlösung durch den Rohrkörper so herunterfließen lässt, dass die Reynolds-Zahl 2100 oder mehr beträgt.

5. Verfahren zur Herstellung von Polymerpartikeln nach Anspruch 1, wobei das Flussraten-Massenverhältnis der Polymerlösung zum Polymer-nicht-Lösungsmittel 1 : 1 bis 1 : 25 beträgt.

6. Verfahren zur Herstellung von Polymerpartikeln nach Anspruch 5, wobei das Flussraten-Massenverhältnis der Polymerlösung zum Polymer-nicht-Lösungsmittel 1 : 3 bis 1 : 25 beträgt.

7. Verfahren zur Herstellung von Polymerpartikeln nach Anspruch 1, darüber hinaus umfassend Isolieren der Polymerpartikel in einem Dispersionslösungszustand.

8. Verfahren zur Herstellung von Polymerpartikeln nach Anspruch 1, wobei die Polymerpartikel im Wesentlichen sphärisch sind.

9. Verfahren zur Herstellung von Polymerpartikeln nach Anspruch 1, wobei die Polymerpartikel poröse Partikel oder Partikel mit einer rauen Struktur auf ihrer Oberfläche umfassen.

**10.** Verfahren zur Herstellung von Polymerpartikeln nach Anspruch 1, wobei das Polymer einen Polyimid-Vorläufer oder ein Polyimid umfasst.

**11.** Verfahren zur Herstellung von Polymerpartikeln nach Anspruch 1, wobei das Polymer ein Polybutadien umfasst.

**12.** Verfahren zur Herstellung von Polymerpartikeln nach Anspruch 1, wobei das Polymer ein Polyamid umfasst.

**13.** Verfahren zur Herstellung von Polymerpartikeln nach Anspruch 12, wobei die Polymerpartikel eine Sphärolith-Struktur aufweisen.

**14.** Apparatur zur Herstellung von Polymerpartikeln, wobei die Apparatur umfasst:

ein Zufuhrmittel für Rohmateriallösung zur Zufuhr einer Polymerlösung und eines Polymer-nicht-Lösungsmittels;
eine Mischlösungs-Kombinationseinheit zur Kombination und zum Mischen von zugeführten Rohmateriallösungen in einem offenen System;
einen im Wesentlichen vertikalen Rohrkörper, der stromabwärts der Mischlösungs-Kombinationseinheit vorgesehen ist; und
eine Dispersionslösungs-Isolierungseinheit, die stromabwärts vom Rohrkörper angeordnet ist, wobei
in der Mischlösungs-Kombinationseinheit zum Rohrkörper keine Rührmittel vorgesehen sind;
der Rohrkörper eine solche Länge aufweist, dass die Ausfällung der Polymerpartikel im Rohrkörper vervollständigt wird; und
die Apparatur so aufgebaut ist, dass die Mischlösung aus der Polymerlösung und dem Polymer-nicht-Lösungsmittel den Rohrkörper so herabfiießen kann, dass die Reynolds-Zahl 4000 oder weniger beträgt.

**15.** Herstellungsapparatur für Polymerpartikel nach Anspruch 14, wobei die Herstellungsapparatur als Rohmateriallösungs-Zufuhrmittel ein Polymerlösungs-Zufuhrmittel zur Zuführung einer Polymerlösung und ein Nicht-Lösungsmittel-Zufuhrmittel zur separaten Zuführung eines polymeren Nicht-Lösungsmittels umfasst.

**16.** Herstellungsapparatur für Polymerpartikel nach Anspruch 14, wobei der Rohrkörper und die Dispersionslösungs-Isolierungseinheit im Kontakt miteinander angeordnet sind.

**17.** Apparatur zur Herstellung von Polymerpartikeln, wobei die Apparatur umfasst:

ein Rohmateriallösungs-Zufuhrmittel zur Zuführung einer Polymerlösung und eines Polymer-nicht-Lösungsmittels;
eine Sprühdüse zur Entnahme von zugeführten Rohmateriallösungen in ein offenes System nach Kombination der Rohmateriallösungen im Raum eines geschlossenen Systems;
einen im Wesentlichen vertikalen Rohrkörper, der stromabwärts der Sprühdüse angeordnet ist; und
eine Dispersionslösung-Isolierungseinheit, die stromabwärts vom Rohrkörper angeordnet ist, wobei
in der Mischlösungs-Kombinationseinheit zum Rohrkörper keine Rührmittel vorhanden sind;
der Rohrkörper eine solche Länge aufweist, dass die Ausfällung der Polymerpartikel im Rohrkörper vervollständigt wird; und
die Apparatur so aufgebaut ist, dass die Mischlösung aus der Polymerlösung und dem Polymer-nicht-Lösungsmittel durch den Rohrkörper so herabfließen kann, dass die Reynolds-Zahl 4000 oder weniger beträgt.

**Revendications**

**1.** Procédé de fabrication des particules de polymère oomprenant :

le mélange d'une solution de polymère qui est obtenue par la dissolution d'un polymère dans un bon solvant et un non-solvant de polymère, qui est un non-solvant pour le polymère et présente une compatibilité avec le bon solvant d'une façon continuelle ou
intermittente ; et la descente de la solution mélangée de la solution de polymère et du non-solvant de polymère par un corps tubulaire prévu substantiellement verticalement d'une façon que le nombre de Reynolds est égal ou inférieur à 4 000, ainsi complétant la précipitation des particules de polymère.

**2.** Procédé de fabrication des particules de polymère selon la revendication 1, dans lequel le mélange de la solution de polymère et du non-solvant de polymère est effectué par un procédé incluant la combinaison de la solution de polymère et du non-solvant de polymère dans un système ouvert ou un procédé incluant le déchargement de la solution de polymère et du non-solvant de polymère à un système ouvert après la combinaison de la solution de polymère et du non-solvant de polymère dans l'espace d'un system fermé.

3. Procédé de fabrication des particules de polymère selon la revendication 1, dans lequel la descente d'une solution mélangée comprend la descente d'une solution mélangée naturellement par un corps tubulaire.

4. Procédé de fabrication des particules de polymère selon la revendication 1, dans lequel la solution mélangée est permise de descendre par le corps tubulaire d'une façon que le nombre de Reynolds est égal ou inférieur à 2100.

5. Procédé de fabrication des particules de polymère selon la revendication 1, dans lequel le rapport de débit de masse de la solution de polymère au non-solvant de polymère est 1 : 1 à 1 : 25.

6. Procédé de fabrication des particules de polymère selon la revendication 5, dans lequel le rapport de débit de masse de la solution de polymère au non-solvant de polymère est 1 : 3 à 1 : 25.

7. Procédé de fabrication des particules de polymère selon la revendication 1, comprenant en outre la collection des particules de polymère en un état de solution de dispersion.

8. Procédé de fabrication des particules de polymère selon la revendication 1, dans lequel la particule de polymère est substantiellement sphérique.

9. Procédé de fabrication des particules de polymère selon la revendication 1, dans lequel la particule de polymère comprend une particule poreuse ou une particule ayant une structure rugueuse sur sa surface.

10. Procédé de fabrication des particules de polymère selon la revendication 1, dans lequel le polymère comprend un précurseur de polyimide ou un polyimide.

11. Procédé de fabrication des particules de polymère selon la revendication 1, dans lequel le polymère comprend un polybutadiène.

12. Procédé de fabrication des particules de polymère selon la revendication 1, dans lequel le polymère comprend un polyamide.

13. Procédé de fabrication des particules de polymère selon la revendication 12, dans lequel la particule de polymère présente une structure sphérulite.

14. Dispositif pour la fabrication des particules de polymère, le dispositif comprenant :

des moyens de fourniture d'une solution de matière première pour fournir une solution de polymère et un non-solvant de polymère ;
une unité de combinaison d'une solution mélangée pour la combinaison et le mélange des solutions de matière première fournies dans un système ouvert ;
un corps tubulaire substantiellement vertical prévu en aval de l'unité de combinaison d'une solution mélangée ; et
une unité de collection d'une solution de dispersion prévue en aval du corps tubulaire,
dans lequel :

des moyens d'agitation sont absents dans l'unité de combinaison d'une solution mélangée au corps tubulaire ; le corps tubulaire présente une longueur pour compléter la précipitation des particules de polymère dans le corps tubulaire ; et
le dispositif est composé de permettre la solution mélangée de la solution de polymère et du non-solvant de polymère descendre par le corps tubulaire d'une façon que le nombre de Reynolds est égal ou inférieur à 4 000.

15. Dispositif de la fabrication des particules de polymère selon la revendication 14, dans lequel le dispositif de la fabrication comprend comme des moyens de fourniture d'une solution de matière première des moyens de fourniture d'un solution de polymère pour la fourniture d'une solution de polymère et des moyens de fourniture d'un non-solvant pour la fourniture séparée d'un non-solvant de polymère.

16. Dispositif de la fabrication des particules de polymère selon la revendication 14, dans lequel le corps tubulaire et l'unité de collection de la solution de dispersion sont placés en communication l'un à l'autre.

17. Dispositif pour la fabrication des particules de polymère, le dispositif comprenant :

des moyens de fourniture d'une solution de matière première pour fournir une solution de polymère et un non-solvant de polymère ;
une buse de vaporisation pour le déchargement des solutions de matière première fournies à un système ouvert après la combinaison des solutions de matière première dans un espace d'un système fermé ;
un corps tubulaire substantiellement vertical prévu en aval de la buse de vaporisation ; et
une unité de collection d'une solution de dispersion prévue en aval du corps tubulaire,
dans lequel :

des moyens d'agitation sont absents dans l'unité de combinaison d'une solution mélangée au corps tubulaire ; le corps tubulaire présente une longueur pour compléter la précipitation des particules de polymère dans le corps tubulaire ; et
le dispositif est composé de permettre la solution mélangée de la solution de polymère et
du non-solvant de polymère descendre par le corps tubulaire d'une façon que le nombre de Reynolds est égal ou inférieur à 4 000.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3026729 A
- JP 8012765 A
- JP 2007056085 A

- WO 2006126563 A1
- JP 2002080629 A
- JP 2006143918 A

**Non-patent literature cited in the description**

- Chemical Engineering. Jikkyo Shuppan Co., Ltd, 1996

- **SHUZO OOE.** physical property constant estimation method for engineers. THE NIKKAN KOGYO SHIMBUN, LTD, 1985, 239